Europäisches Patentamt

European Patent Office

Office européen des brevets

(11) Publication number: **0 127 166**
A2

(12) # EUROPEAN PATENT APPLICATION

(21) Application number: **84106023.9**

(22) Date of filing: **26.05.84**

(51) Int. Cl.³: **F 01 K 25/10**
**C 02 F 1/22**

(30) Priority: **31.05.83 US 499286**
**05.12.83 US 557899**

(43) Date of publication of application:
**05.12.84 Bulletin 84/49**

(84) Designated Contracting States:
**DE FR GB**

(71) Applicant: **Chang, Yan Po, Dr.**
**181 Sherbrooke Avenue**
**Williamsville New York 14221(US)**

(72) Inventor: **Chang, Yan Po, Dr.**
**181 Sherbrooke Avenue**
**Williamsville New York 14221(US)**

(74) Representative: **Eisenführ & Speiser**
**Martinistrasse 24**
**D-2800 Bremen 1(DE)**

(54) **Limitless and limited heat sources power plants.**

(57) A method is disclosed to utilize the thermal energy from essentially limitless heat sources, such as the ocean or the atmosphere, and from limited heat sources, such as the combustion of fossil fuels, for power production. The fluid from such heat sources gives heat to the working medium of a prime mover by passing it through a first heat transport means. The effluent cooled source fluid from the first heat transport means is then used for removing the exhaust heat from the prime mover through a second heat transport means and can also be used for the purification of liquids by a freezing process. The first and the second heat transport means comprise various processes so devised that net work is produced at a significant rate by the power system and entropy is produced continuously in the surroundings. The limited heat source is optional.

F I G. I

EP 0 127 166 A2

## LIMITLESS AND LIMITED HEAT SOURCES POWER PLANTS

## BACKGROUND OF THE INVENTION

This invention relates to power plants and, more particularly, to methods for the production of power and fresh water by utilizing the thermal energy from substantially limitless heat sources, such as the atmosphere and the ocean, with or without the supplementation of limited heat sources, such as the fossil fuel, nuclear fuel, geotherm, and concentrated solar radiant energy.

In regard to the utilization of limited heat sources, the most modern steam turbine power plants lose more than half of the heat input to the environment through the condenser. Various methods have been employed for increasing the overall thermal efficiency, but to date none has been successful to reduce the cost of energy drastically.

As to the utilization of the limitless heat sources, an attempt to tap the thermal energy of the ocean was made during 1925 to 1929 by G. Claude. Since then, various modifications of the Claude power plant have been proposed, for example, U.S. Patents Nos. 3,928,145 and 4,087,925. When the large volume of water to be pumped

0127166

from deep ocean is considered, the thermal efficiency will be less than 2%. Due to the low efficiency, and the requirement for a large prime mover and associated piping system, the Claude power plant and those based thereon were not and have never become practical.

Tawse disclosed in U.S. Patent No. 4,347,702, a power plant comprising an internal combustion engine, a vapor-refrigeration heat pump and a turbine-compressor unit which operates in a vapor power cycle of low temperature so that the heat usually discharged as waste from the internal combustion engine and the heat pump are utilized. Bjorklund, in U.S. Patent No. 4,292,809, attempted to utilize low-grade heat sources, such as the cooling water of a high-grade heat source power plant, by passing the fluid of a low-grade heat source through a heat exchanger to heat the working fluid of a prime mover and to remove heat from the expanded working fluid by a vapor-refrigeration heat pump which discharges heat to the low-grade heat-source fluid effluent from the said heat exchanger. In these two patents, both the prime mover and the heat pump operate in vapor cycles and the thermal energy of limitless heat sources as referred to in my invention can be partially utilized. These two prior art power plants, however, can produce useful work of only a limited amount, if any.

In regard to the conversion of saline water into fresh water, there are two commonly used methods: evaporation and freezing. Great interest in the latter has recently been revived due to its low energy consumption rate and much decreased requirement for metallic heat transfer surface as compared with the former. The fresh water thus produced is still more expensive in comparison with that obtained from distant natural sources.

It is known that the larger the difference between the highest and the lowest temperatures of a power cycle, the higher will be its thermal efficiency. The high temperature development has been to the allowable limit of material. The lowest temperature has been limited by the naturally available water and atmosphere at the ambient temperature.

In the conventional approach of power production, a heat source and a heat sink are usually considered as closed heat reservoirs where only heat can cross their boundaries. In the present invention, the ocean and the atmosphere, are treated as open heat reservoirs where mass and heat can cross their boundaries. Since the thermal energy of the ocean and atmosphere is almost limitless and freely available, the overall thermal efficiency of the whole power plant using such a heat source need not be a factor for much concern. Instead, the thermal efficiency of the prime mover is of great importance with respect to the first cost and the operation and maintenance costs of the power plant. In order to obtain higher thermal efficiency of the prime mover, the lowest temperature of a power cycle should be as low as materials permit.

## SUMMARY OF THE INVENTION

In this invention, the prime mover can be a turbine operating in a closed cycle. The working medium can be pressurized air or other permanent gas and the cycle can operate with lowest temperature in a cryogenic level. A pressurized condensible vapor can also be used as the working medium, provided that its evaporation and condensation are not impeded at low temperature. The thermal energy is drawn from almost limitless heat source, or sources with or without the supplementation of limited heat source, or sources. In the following description, the fluids of the limitless and limited heat sources will be referred to as the source fluid, for brevity. More specifically, a limitless heat source will be represented by the atmospheric air or ocean water, while a limited heat source by the combustion of a fossil fuel.

If heat is supplied exclusively by the limitless heat source, the source fluid gives heat in a large heat exchanger to evaporate an intermediary volatile fluid, the vapor of which is conducted to a second heat exchanger releasing heat by condensation to the working fluid which drives the prime mover. This loop of an intermediary volatile fluid is also used, if the heat supplied by the limited heat source is much less than that extracted from the limitless heat source. The cooled source fluid effluent from the said large heat exchanger is used for cooling the expanded working fluid of the prime mover through a heat transport means. The source fluid which has been cooled to a temperature below the freezing point of pure water can be used for the conversion of saline water into fresh water or dirty water into usable water by a freezing process. Both atmospheric air and water at the ambient temperature may be used simultaneously as a combined limitless heat source.

When the thermal energy supplied by limited heat source is comparable with that by the limitless heat source, the intermediate volatile fluid and the said large heat exchanger are not needed. Then the working fluid can be heated by the source fluid in the said second heat exchanger, if the atmospheric air can be cooled to very low temperature by the working fluid and can be further cooled by passing it through an expansion means so that it can be used for cooling the expanded working fluid of the prime mover. As a result of having utilized the thermal energy of the limitless heat source which is free from cost, the net work produced by such power plants can be considerably larger than the heat supplied by the limited heat source which has to be paid for.

BRIEF DESCRIPTION OF THE DRAWINGS

For a fuller understanding of the present invention, reference should be made to the following detailed description thereof taken in conjunction with the accompanying drawings, wherein:

FIG. 1 is a flow diagram, in schematic form, of a power plant depicting the basic concept of my invention for using the ocean or the atmosphere as an open heat reservoir to produce mechanical work with the application of a vapor-refrigeration heat pump;

FIG. 2 is similar to FIG. 1 except that it illustrates the application of an absorption-refrigeration heat pump;

FIG. 3 is similar to FIG. 1 except that no heat pump is employed and the atmosphere is used as an open heat reservoir;

FIG. 4 is a flow diagram of another embodiment of my invention, in schematic form, of a power plant equipped with an absorption-refrigeration heat pump and drawing heat from the ocean through an intermediate volatile fluid and from the combustion of a small amount of a fossil fuel;

FIG. 5 illustrates a power plant, similar to FIG. 4 with the atmosphere being the limitless heat source;

0127166

FIG. 6 illustrates a representative method for removing the large amount of heat from an absorption-refrigeration heat pump, as represented by the expansion means 32 in FIGS. 4 and 5;

FIG. 7 is a temperature-entropy diagram of a gas power cycle 1234 with heating and cooling at increasing pressure and adiabatic expansion and compression, compared with a Brayton cycle 123'4' of the same compression ratio;

FIG. 8 is a temperature-entropy diagram of the power cycle 1234 of FIG. 7 superimposed with a vapor-refrigeration cycle, showing that net work can be done;

FIG. 9 illustrates a power plant in accordance with my invention, wherein the atmosphere is the limitless heat source and a subsystem of turbine-compressor unit is employed for cooling the expanded working fluid of the prime mover;

FIG. 10 shows a power plant, similar to FIG. 9, wherein a pressurized volatile fluid system is used for cooling the expanded working fluid of the prime mover;

FIG. 11 is a flow diagram of a power plant, similar to FIGS. 9 and 10, wherein the cooled source fluid is used to cool the expanded working fluid;

FIG. 12 illustrates the combined use, in accordance with my invention, of atmosphere and water as the limitless heat source by utilizing the sensible heat of water;

FIG. 13 is similar to FIG. 12 except that both the sensible heat and latent heat of water are utilized; and

FIG. 14 shows the fuel-economy achieved by application of my invention in utilizing the limitless heat source.

## DETAILED DESCRIPTION OF THE PREFERRED EMBODIMENTS

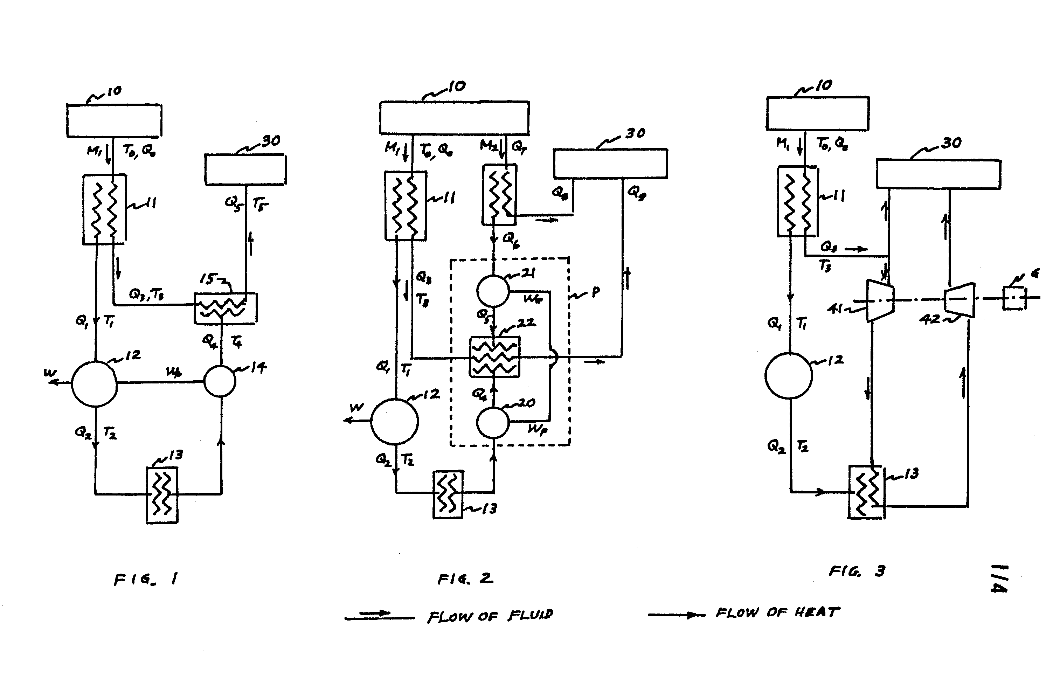

Referring to FIG. 1 wherein the operating principles and flow diagram of a power plant equipped with a heat pump of the vapor-refrigeration type is illustrated, the heat source depicted by 10 may be the ocean or the atmosphere which is treated herein as an open reservoir. The source fluid at temperature $T_0$ flows at the mass flow rate of $M_1$ through a large heat exchanger 11 wherein it gives heat to an engine 12 and is cooled to temperature $T_3$ as it leaves the heat exchanger 11. If the source fluid is gas its flow is effected largely by the gravitational force. If it is liquid, the flow is maintained by a pump. The engine 12 receives heat through the heat exchanger 11 at the rate of $Q_1 = M_1(h_0-h_3)$ where $h_0$ and $h_3$ are the enthalpies of the source fluid at temperatures $T_0$ and $T_3$, respectively. The engine rejects heat through a heat exchanger 13 at the rate of $Q_2$. This rejected heat $Q_2$ is removed by heat pump 14, which requires mechanical work input at the rate of $W_p$ and delivers heat to the cooled source fluid at the rate of $Q_4$ through heat exchanger 15. The rate of heat rejected to the environment 30 is thus, $Q_5 = Q_3 + Q_4 = M_1h_3 + Q_4$ which is of lower grade (larger entropy) in comparison with $Q_0 = M_1h_0$. Therefore, entropy is continuously produced in the surroundings. Since $T_0 > T_3 > T_2$ and if $\Delta T_e = T_1 - T_2 >> \Delta T_p = T_3 - T_2$, then net work can be done at the rate of $W = W_e - W_p$ where $W_e$ and $W_p$ designate the rate of work done by the engine 12 and the rate of work required by the heat pump 14, respectively. In the above description, the condition $\Delta T_e >> \Delta T_p$ is an important criterion on the capability of the system to do net work, as will be discussed later.

With the above description and the presumption, the equality of the first law and the inequality of the second law of thermodynamics are satisfied:

$$Q_1 - Q_5 = W \quad \text{and} \quad S_5 - S_0 > 0$$

It is to be noted that the environment 30 can be the ocean or the atmosphere. For instance, if it is the ocean, the source fluid effluent from the heat exchanger 15 can also be discharged to the ocean at a position far apart from the source 10 so that the thermodynamic state of the source fluid in reservoir 10 is not disturbed and hence the power plant is operating in a cycle. Clearly, the heat source of the system in FIG. 1 is the source fluid flowing out of reservoir 10, while the heat sink is the source fluid effluent from the heat exchanger 15. The environment 30 is actually a "dumping ground" of fluid mass and heat that is carried by the flowing fluid.

FIG. 2 shows a flow diagram employing a heat pump of absorption-refrigeration type. In FIG. 2, the common numerals represent the same apparatus depicted in FIG. 1. Exhaust heat $Q_2$ from engine 12 is removed by the heat pump, P, of the absorption-refrigeration type which is described by an equivalent system comprising an equivalent vapor-refrigeration heat pump 20, an equivalent engine 21 and a heat exchanger 22, a procedure usually employed in environmental engineering. The absorption-refrigeration heat pump draws energy from the heat source 10 at the mass flow rate $M_2$ of the source fluid. The equivalent engine 21 produces mechanical work at the rate of $W_e'$ to drive the equivalent vapor-refrigeration heat pump 20. The engine 21 and the heat pump 20 discharge heat through the heat exchanger 22 at the rates $Q_5$ and $Q_4$, respectively, to the cooled source fluid effluent from the heat exchanger 11. The source fluid which flows at the rate of $M_2$

takes heat out of the heat source at the rate of $Q_7$, rejects heat to the environment at the rate of $Q_8$ and gives heat at the rate of $Q_6$ to the engine 20 through heat exchanger 22. The source fluid at the mass flow rate of $M_1$ discharges heat at the rate of $Q_9 = Q_3 + Q_4 + Q_5$ to the environment. It is to be noted that $(S_8 + S_9) > (S_1 + S_7)$, whereby entropy is produced to the surroundings. If the cold fluid effluent from heat exchanger 11 is sufficient to absorb $Q_4$ and $Q_5$, then net work can be produced at the rate of W. This criterion will be discussed later. Thus, the following equality and inequality, as required by the first and second laws of thermodynamics, hold:

$$Q_0 + Q_7 = W + Q_8 + Q_5 \text{ and } S_8 + S_9 - S_0 - S_7 > 0.$$

FIG. 3 shows the flow diagram, in schematic form, of a power plant wherein the source reservoir 10 is atmosphere and the same numerals represent the same apparatus as depicted in FIGS. 1 and 2, except that the air effluent from the heat exchanger 11 is at the temperature $T_3$ slightly higher than the lowest temperature of the engine cycle. For this case, the heat pump is not needed and a subsystem comprising a turbine 41, a scavenging pump 42 and a generator G is used. A portion of the cooled source fluid from heat exchanger 11 discharges to the environment 30 and the rest is conducted to the turbine 41 which drives the scavenging pump 42 and the generator G. The source fluid effluent from turbine 41 is thus further cooled and is used for removing the exhaust heat of engine 12 through heat exchanger 13. The scavenging pump is used to insure that the temperature of the further cooled source fluid is lower than $T_2$ everywhere in the heat exchanger 13.

To see that the cooled source fluid effluent from heat exchanger 11 in FIG. 1 is the heat sink even in the usual sense of Equilibrium Thermodynamics, one notes that the effluent cooled source fluid flows into a large tank (i.e., a reservoir) which has already contained the same fluid at the same temperature and the same pressure as those of the said cooled source fluid. The fluid which flows continuously and steadily into and out of the same tank provides the same function as the coolant of any existing power plant, such as the cooling water of the condenser of a steam power plant and the deep-ocean water of the Claude power plant. Thus, the power plants depicted in FIGS. 1, 2 and 3 operate in a cycle, do mechanical work, produce entropy to the universe, and exchange heat with more than one heat reservoir, as required by the second law of thermodynamics.

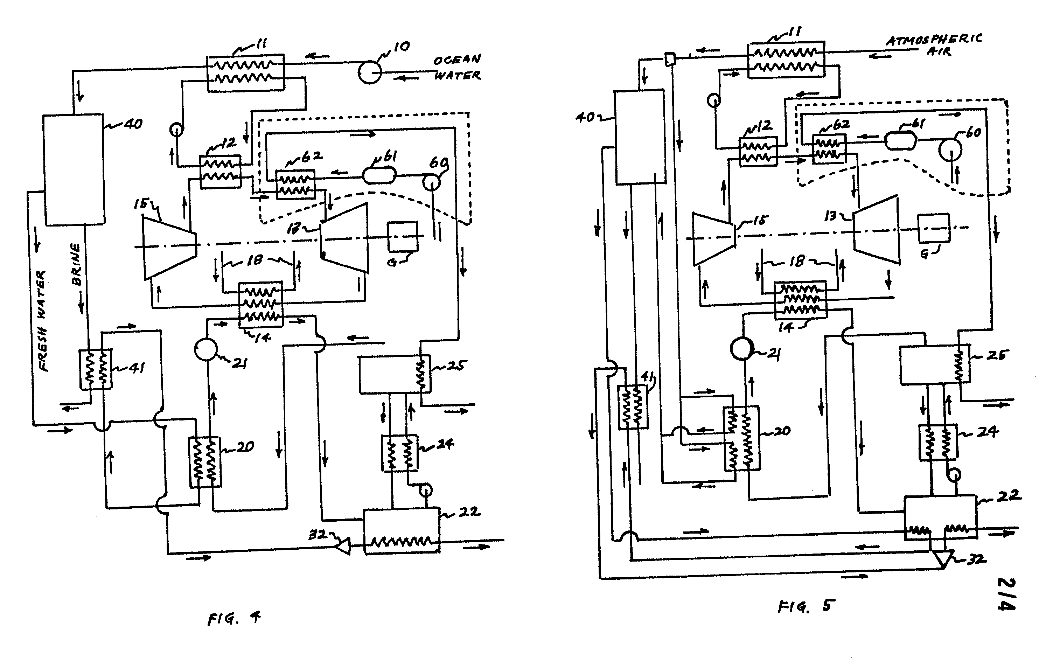

Specific examples of more detailed power plants, constructed in accordance with my invention, are now discussed in conjunction with FIGS. 4-5 and 8-10.

Referring to FIG. 4, ocean water is delivered to a heat exchanger 11 by a pump 10. In the heat exchanger 11, a volatile fluid in liquid phase is evaporated. The vapor of the volatile fluid is condensed in a heat exchanger 12, releasing heat to the working fluid of the prime mover which is shown schematically as the combination of a turbine 13 and a compressor 15. Although the use of the volatile fluid is not necessary from thermodynamic viewpoints, it is required for practical construction. The reason for this is that the heat exchanger 11 is quite large and, therefore, would be difficult to install in proximity to the prime mover. The heat exchanger 11 and all other heat exchangers should be erected in such a position that the gravitational force can be utilized to have the cooled fluid flow downward and the heated fluid upward. The heated working fluid expands in the turbine 13 which drives a generated G or the like.

When the working fluid leaves the turbine 13, it is cooled through the heat exchanger 14 which is also the evaporator of a heat pump and then enters the compressor 15, and the cycle repeats itself. The ocean water leaves the heat exchanger 11 at a temperature of a few degrees below the freezing point of the ocean water. This cold saline water enters immediately a desalination plant 40 wherein fresh water is produced by a freezing process. The detailed description of the conversion of saline water into fresh water by a freezing process will not be given here, since the same is a well known process.

FIG. 4 also shows, in schematic form, the principal components of an absorption-refrigeration heat pump which includes the evaporator 14, an expansion valve 21, a condenser 20, a generator 25, an absorber 22, a pump 23, and a heat exchanger 24. Dephlegmators, rectifying devices and the like are not shown, since these are known to those skilled in the art. To accelerate the evaporation of refrigerant in the generator 25 and the condensation of the refrigerant vapor in the condensor 20, a compressor of low compression ratio may be installed between the condenser 20 and the generator 25, if no limited heat source is used. If heat is also supplied by a limited heat source at a relatively small rate, a subsystem as enclosed by the dashed line in FIG. 4 and including components 60, 61, 62, is added. Atmospheric air is forced to flow into a combustion chamber 61 by a supercharger 60. The hot gas gives heat to the working fluid in a heat exchanger 62. The gas effluent from heat exchanger 62 is conducted to heat the generator 25.

The cold fresh water from the desalination plant is first used to remove the heat from the condenser 20 and then cooled by the brine, discharged from the desalination plant, through a heat exchanger 41. This recooled fresh water is then used for removing the heat from the absorber 22. An auxiliary system 18, attached to heat exchanger 14, may be provided for starting the prime mover. The auxiliary system 18 can be simply a tank of liquified air which may be produced by the power plant during low-load periods (usually at night).

FIG. 5 illustrates the flow diagram, in schematic form, of a power plant which extracts thermal energy from the atmosphere and is equipped with an absorption-refrigeration heat pump. The same numerals in FIGS. 5 and 4 represent the same components. The temperature of the air effluent from the heat exchanger 11 can be in the cryogenic level. Part of this cooled air can be used for desalination and the remainder for cooling the condenser 20. In order to have the heat removed from the condenser at almost constant temperature, multiple parallel passages of the cold air may be employed as shown in the figure. The fresh water produced from desalination plant may be used to cool the absorber 22.

In view of the large amount of heat to be removed from the absorption-refrigeration heat pump, a slight change of phase of the fresh water from liquid to vapor should be allowed. One way to accomplish this, as illustrated in FIG. 6, is to let a fraction of fresh water evaporate partially in a by-pass circuit 71 by passing it through an expansion valve 70. This liquid-vapor mixture is then carried by the main stream of water through the convergent divergent part of the main conduit 72 and discharged from the power plant as liquid.

In the power plants depicted in FIGS. 4 and 5, the prime mover with working gas may operate basically in Brayton cycle. If, however, the working fluid follows the Lenoir cycle, then the compressor 15 is not needed. The constant-volume heating can be approximately achieved by known methods of which a notable example is the pulsating flow of the V-2 rocket in World War II. An efficient method is to employ compression-flow heat exchangers which are disclosed herein and in my U.S. Patent No. 4,433,545, e.g., a vortex cooler which can provide the cooling of the working fluid by a process between the isobaric and isothermal processes and a vortex heater which can provide the heating of the working fluid at a process of rapidly increasing pressure. The cycle is shown in FIG. 7 wherein 123'4' and 1234 represent Brayton and the present new cycles, respectively. The latter is more advantageous over the former for the power plants in FIGS. 4 and 5, although Brayton cycle can also be employed without difficulty.

An easy calculation shows that if atmospheric air is the limitless heat source without the supplementation of any limited heat source, the source fluid (air) is to flow through the heat exchanger 11 at the rate of more than one million pounds per hour in order to produce an output of megawatts. Therefore, the heat exchanger 11 must be very large. The air-flow rate can be reduced by the supplementary use of a limited heat source and/or by supercharging the air flow. Note that a supercharger requires mechanical work, but it also increases the temperature of the source fluid at the inlet of the heat exchanger 11 and hence a portion of the mechanical work is recovered.

In the use of atmospheric air as a heat source, the condensation of its moisture into water is beneficial to the heat transfer in the heat exchanger 11. The formation of ice can be avoided in the heat exchanger by separating out the condensed water as soon as it is formed.

A vapor-refrigeration heat pump can be also employed in the power plants shown schematically in FIGS. 4 and 5, if the power cycle 1234 in FIG. 7 is employed so that the engine operates in a temperature range much larger than that under which the heat pump is operated, as shown by the temperature-entropy diagram in FIG. 8 wherein the power cycle is represented by 1234 and the vapor-refrigeration cycle by 1'2'3'4'. Clearly, net work can be done, if the heat pump is cooled by multi-passage flow of the cooled source fluid, as depicted in FIG. 5. However, if the prime mover operates in a Rankine cycle it can be readily seen by drawing both vapor cycles in a temperature-entropy diagram that such a power plant can produce little net work.

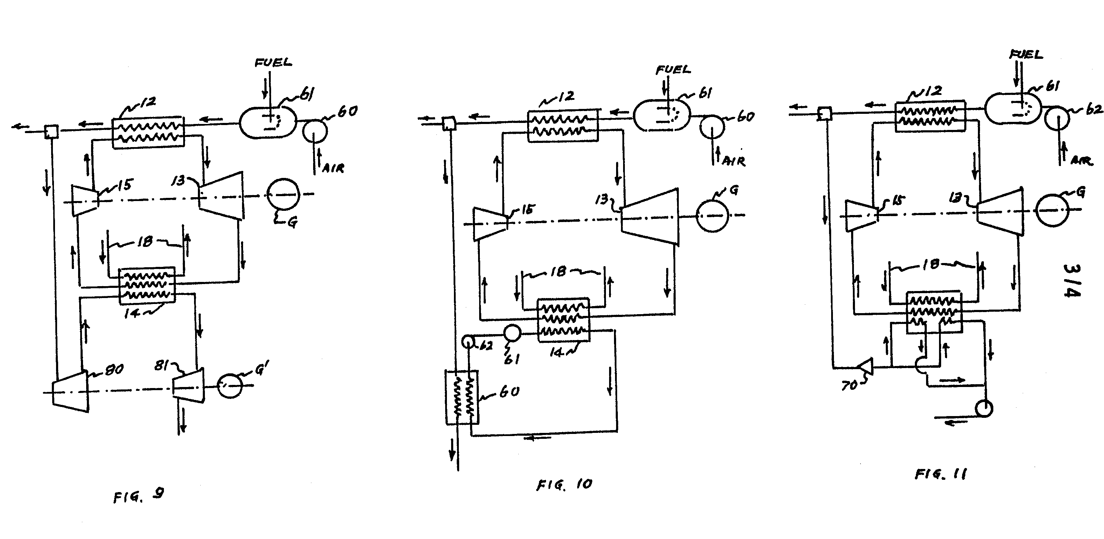

If the prime mover operates in the new cycle of FIG. 8, a heat pump is not necessary. If the heat supplied by limited heat source is at an amount comparable with that extracted from the limitless heat source and/or the source fluid from the limitless heat source is supercharged, then the large heat exchanger 11 is not needed. A flow diagram of such a power plant is illustrated, in schematic form, by FIG. 9 wherein the atmosphere is the limitless heat source. The same numerals in FIGS. 9 and 5 designate the same units. The effluent cooled source fluid from the heat exchanger 12 is partly diverted for desalination or other cooling processes, if needed, and partly to drive a subsystem comprising a turbine 80, a scavenging pump 81 and a generator G'. The expanded source fluid effluent from turbine 80 is employed for cooling the expanded working medium of the prime mover. This power plant can operate in any power cycle, although the new cycle 1234 in FIG. 7 is preferred.

FIG. 10 illustrates another flow diagram of a power plant which extracts the thermal energy from the atmosphere and operates in the new cycle of FIG. 7. The same numerals in FIGS. 5, 9 and 10 represent the same units. In FIG. 10, the cooled source fluid effluent from the heat exchanger 12 is partly diverted for desalination or other cooling processes, if needed, and partly to a heat exchanger 60 in which a pressurized condensible vapor is condensed by the cooled source fluid. The condensate is pumped through an expansion valve 61 by pump 62 to the heat exchanger 14 wherein the condensate evaporates. The said pressurized condensible vapor is to flow with increasing pressure in heat exchanger 60. This flow at adverse pressure gradient can be achieved by using a vortex-flow heat exchanger, of the kind disclosed in U.S. Patent No. 4,433,545. Since $T_2 - T_1$ (FIG. 7) is small and in virtue of the compression-flow of the said condensible vapor in heat exchanger 60, both the circulation and the desired heat transfer in heat exchangers 60 and 14 can be easily achieved without the use of vapor compressor which consumes considerable mechanical work.

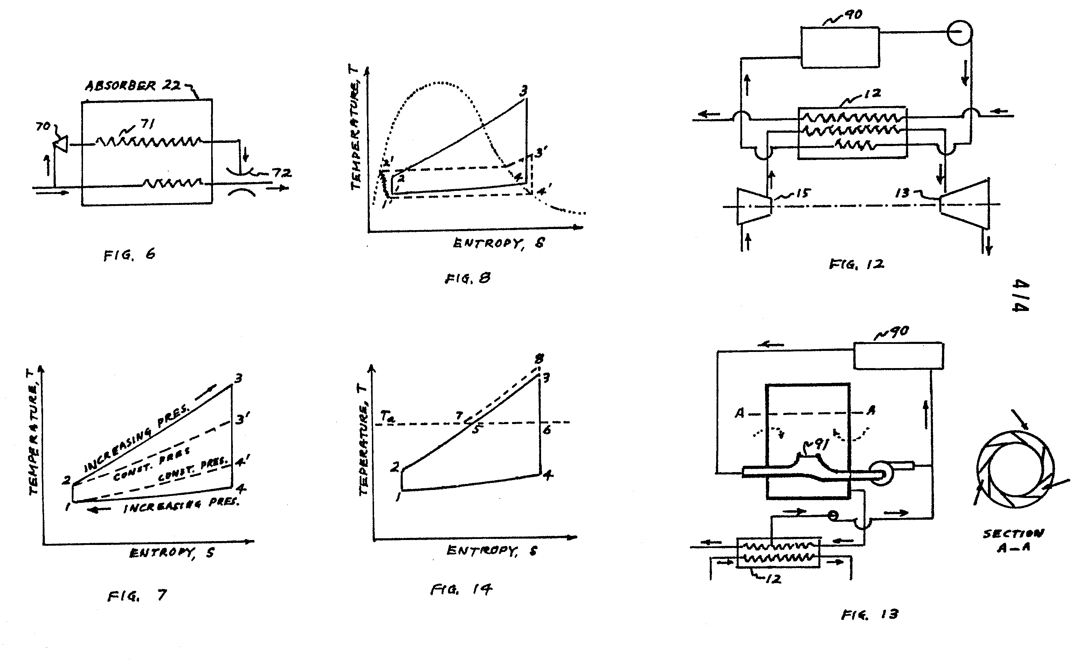

For small $(T_2 - T_1)$ of the new cycle in FIG. 7, the expanded working fluid of the prime mover can be cooled directly by the cooled source fluid effluent from the heat exchanger 12 by passing the said cooled source fluid through an expansion valve 70, as shown in FIG. 11. A scavenging compressor 71 may be provided, should it be needed. The scavenging compressor 71 would require only a small amount of mechanical work, depending upon the compression ratio of the supercharger 60.

It is to be noted that the lowest temperature in the power plant illustrated in FIG. 4 is limited by the freezing point of saline water, while the highest temperature of the ocean surface would not be over 100°F. The maximum thermal efficiency is thus limited below 10%. An effective method for increasing the thermal efficiency of the prime mover as well as the productivity of cold fluid from the power plant and the reduction of size of heat exchangers 11 or 12 is the combined use of water and atmosphere as the source fluid.

In FIGS. 12 and 13 are shown in schematic form, two embodiments with atmospheric air and clean water as the limitless heat sources: one is to utilize the sensible heat of water and the other its latent heat. Clean water is pumped from a reservoir 90 and circulated through the heat exchanger 12 where it gives heat to the working fluid of a prime mover. The water does not change phase in the embodiment of FIG. 12. In FIG. 13, the atmospheric air enters a cylindrical vessel through guided vanes at the cylindrical wall. Since once the prime mover has been started, steady-flow of air is established by its body force, and/or by a supercharger (not shown in the figure), vortex motion prevails in the cylindrical vessel. The depression in the core of the vortex then results in a partial evaporation of the water from the open area 91. The vapor is carried by the air into the heat exchanger 12 and condensed therein. Just before condensed water is cooled to its freezing point, it is removed from the heat exchanger 12 by a separating device (not shown in the figure) and pumped to reservoir 90.

The fuel economy can be seen from the power cycle in FIG. 14 wherein $T_a$ is the temperature of the ambient fluids (atmospheric air and/or water). It is seen that the work done by the limitless heat source, area 12564 can be considerably larger than the work done by the limited heat source, area 536. Owing to the utilization of the thermal energy of the ambient fluid, the heat supplied by the limited heat source can be approximately represented by the area 678 which is smaller than the area 1234.

In the above embodiments of my invention, the working fluid has been considered as a pressurized permanent gas, such as compressed air. Naturally, a pressurized condensible vapor can also be employed as the working fluid. In this case the power cycle is basically the Rankine cycle. Since, however, the change of phase is involved in the working fluid, the said compression-flow heat exchangers are to be slightly modified in detailed construction but not in principle.

This specification has described systems constructed in accordance with my invention for utilizing thermal energy from the ocean, the atmosphere or other sources which are usually considered as passive or inert, such as lakes, rivers and the like which receive solar radiant heat to compensate for the heat that is continuously drawn out by the power plant. Sewage water from a city or industrial waste water can also be utilized for the production of power and conversion into usable water.

Although preferred embodiments of the present invention have been illustrated and described, changes will obviously occur to those skilled in the art. It is therefore intended that the present invention is to be limited only by the scope of the appended claims.

What is claimed is:

1. A method of utilizing the thermal energy of substantially limitless heat sources such as the ocean, the atmosphere and the like and of limited heat sources such as the fossil fuel, nuclear reaction and the like to power a prime mover which operates in a closed cycle, comprising the steps of:

(a) passing the fluid or fluids of such heat sources through a first heat transport means wherein said source fluid gives heat to the working fluid of the prime mover and is cooled as it flows out of the said first heat transport means to produce cooled source fluid;

(b) expanding the heated working fluid in the prime mover to do work;

(c) conducting the expanded working fluid into a second heat transport means;

(d) diverting at least a portion of the cooled source fluid effluent from the said first heat transport means into the said second heat transport means;

(e) cooling the expanded working fluid in the said second heat transport means by the diverted cooled source fluid; and

(f) conducting the working fluid back to the said first heat transport means to repeat steps (a) through (f), both of said heat transport means being selected so that the power cycles resulting from the method produce net work and entropy in surroundings.

2.  The method of claim 1 wherein the second heat transport means comprises a heat exchanger and a subsystem which consists of a turbine, a scavenging compressor and a generator and wherein a portion of said cooled source fluid from the first heat transport means is conducted into the turbine of the said subsystem to do work and to discharge further-cooled source fluid, the said further-cooled source fluid being conducted to the said heat exchanger of the second heat transport means wherein the expanded working fluid is cooled, the said further-cooled source fluid being discharged to surroundings.

3.  The method of claim 1 wherein the said second heat transport means comprises first and second heat exchangers and wherein said expanded working fluid is conducted to said first heat exchanger and the diverted cooled source fluid effluent from the first heat transport means is conducted to said second heat exchanger (of the second heat transport means), said second heat transport means further comprising a closed loop between said first and second heat exchangers, said loop comprising a volatile fluid, said volatile fluid being evaporated in the said first heat exchanger to cool the said working fluid and being condensed in the said second heat exchanger giving heat to the cooled source fluid diverted from the first heat transport means, the condensate of the volatile fluid being recycled to said first heat exchanger (of the second heat transport means) by a pump and through an expansion means.

4. The method of claim 3 wherein both of said heat transport means comprise heat exchangers of compression-flow type so that the working fluid is heated as well as cooled and the volatile fluid is cooled at increasing pressure.

5. The method according to claim 1 wherein at least a portion of the said cooled source fluid is used in a cooling process in addition to cooling step (e).

6. The method of claim 5 wherein the additional cooling process is a freezing process for liquid purification.

7. The method of claim 6 wherein the liquid purification process is desalination process.

8. The method of claim 7 wherein the cold purified water is used for cooling in said second heat transport means.

9. The method according to claim 1 wherein:
the second heat transport means comprises a
heat pump of vapor-refrigeration type;
the prime mover operates in any one of the
following cycles: (a) heating and cooling at
increasing pressure, adiabatic compression and
expansion; (b) heating at increasing pressure,
cooling at constant pressure and adiabatic
compression and expansion; and
a portion of the cooled source fluid from the
first heat transport means is used to cool the
condenser of the vapor-refrigeration heat
pump, while the rest of the cooled source
fluid is used for a freezing process in a
liquid purification plant.

FIG. 1

FIG. 2

FIG. 3

FLOW OF FLUID

FLOW OF HEAT

1/4

0127166

FIG. 4

FIG. 5

FIG. 9

FIG. 10

FIG. 11

0127166

FIG. 12

FIG. 13

SECTION A-A

FIG. 8

ENTROPY, S

TEMPERATURE, T

FIG. 14

ENTROPY, S

TEMPERATURE, T

ABSORBER 22

FIG. 6

FIG. 7

ENTROPY, S

TEMPERATURE, T

INCREASING PRES.

CONST. PRES.

CONST. PRES.

INCREASING PRES.